# EUROPEAN PATENT SPECIFICATION

(11) **EP 0 864 161 B1**
(45) Date of publication and mention of the grant of the patent: **28.06.2000**
(21) Application number: 96939225.7
(22) Date of filing: 27.11.1996
(51) Int. Cl.: G21F 9/14, G21F 9/16, C04B 35/622, C04B 35/624, C04B 35/486

(54) **A METHOD OF WASTE TREATMENT**
VERFAHREN ZUR BEHANDLUNG VON ABFÄLLEN
PROCEDE DE TRAITEMENT DE DECHETS

(30) Priority: 29.11.1995 GB 9524366
(43) Date of publication of application: 16.09.1998
(73) Proprietor: British Nuclear Fuels PLC, Risley Warrington Cheshire, WA3 6AS (GB)
(72) Inventor: PARKES, Peter, Seascale Cumbria CA20 1PG (GB); HOBBS, Jeffrey, William, Seascale Cumbria CA20 1PG (GB); LAWSON, Simon, Seascale Cumbria CA20 1PG (GB)
(74) Representative: Goddard, David John
(86) International application number: GB9602911
(87) International publication number: WO9720322

(56) References cited:
- GB-A- 2 163 893
- US-A- 4 164 479
- US-A- 4 464 294
- DATABASE INIS INTERNATIONAL ATOMIC ENERGY AGENCY (IAEA), VIENNA, AT AN 14/4):729252, ATKINSON ET AL: "THE FABRICATION AND PROPERTIES OF ZROF CERAMICS FOR THE IMMOBILIZATION OF ZIRCALOY NUCLEAR WASTE" XP002026641 & J.MATER.SCI., vol. 17, no. 10, 1982, UK, pages 2979-2989,

## Description

The present invention relates to a method of treating zirconium-based metal waste particularly, though not exclusively, waste resulting from nuclear fuel reprocessing.

Fuel rods for nuclear plants comprise a core of enriched uranium material having an outer can or cladding of a zirconium-based alloy. Presently, when the spent fuel rods are reprocessed, they are chopped up into shorter lengths and treated with nitric acid to dissolve out the spent fuel core, leaving behind the cladding since it is not attacked by the nitric acid. The pieces of zirconium alloy constitute so-called intermediate level waste which needs to be contained and stored safely for many years, One current method of dealing with this waste is to crush the pieces and store it encapsulated as the metal in concrete grout in drums.

A further problem with reprocessing irradiated fuel is that associated with isolating and dealing with the fission products generated during the nuclear reaction process. Normally, the fission products are separated from the uranium and plutonium, the latter two elements being reprocessed for further use. However, it is necessary to contain and safely store the fission by-products as they constitute so-called high-level waste. One method of dealing with this waste is by encapsulation by vitrification. Dealing with the zirconium waste and the fission product waste currently constitutes two separate stages of the reprocessing cycle and are both extremely costly in both plant and in running costs.

It is an object of the present invention to provide a process for dealing more economically with zirconium waste. It is a further object to provide an alternative and more cost effective means of dealing with and storing the fission product waste.

The present invention relates to processes for treating zirconium-based metal waste according to claims 1, 8 and 10, the processes including the steps of converting at least some of said zirconium-based metal into an oxide. As hereafter described in more detail, the oxide is used in the production of a green body, for example by pressing, and the green body is sintered.

One zirconium-based metal alloy currently in use is known as "Zircalloy" (trade name) and comprises in excess of 95 wt% zirconium.

The step of bringing the zirconium-based metal into solution by chemical or electrochemical means is known in the prior art and provides a stable solution, eg a nitrate and oxide residues. See, for example, "Use of Ellectrochemical Processes in Aqueous Reprocessing of Nuclear Fuels" by F Baumgartner and H Schmeider, Radiochemica Acta, Vol. 25 pp 191-210 (1978).

In this specification the terms "zirconium oxide" and "oxide of zirconium" and similar terms are frequently used. The actual chemical compositions resulting from the processes described herein may not have chemical compositions which correspond exactly either to a pure zirconium oxide or to zirconia, ZrO₂, since the sintered materials in question will contain impurities and/or intentionally added materials and contaminants which it is desired to encapsulate, and/or to stabilise the crystal phase and which may also modify the crystal structure. Examples of such stabilising and modifying additions may include for example, metal oxides such as yttria, Y₂O₃, to stabilise the crystal phase of zirconium oxide. Furthermore, in embodiments to be described below, particles of zirconium oxide powder are embodied in a matrix also containing aluminium and/or silicon atoms. Therefore, any reference herein to "zirconium oxide" or similar terms are to be taken as generic terms encompassing the resulting matrix of the sintered product or intermediate material in all embodiments and variations of the invention described herein howsoever arrived at.

The zirconium-based metal may constitute waste resulting from irradiated fuel rods from nuclear plants for example.

The zirconium-based metal may be brought into solution by electrochemical dissolution wherein the metal is made anodic in an electrolyte of nitric acid so converting the metal to a nitrate. In this method, a substantial proportion, perhaps about 85% of the zirconium metal, is converted directly to the oxide which forms a sludge in the dissolution vessel. The remaining nitrate may be thermally treated to decompose the nitrate to the oxide in a known manner.

The resulting oxide may be separated, dried and milled to break down friable flakes if necessary; the resulting powder being pressed, cast or extruded for example into "green" compacts and sintered to solid bodies in known manner at temperatures up to about 1800°C.

Those steps in the ceramics art normally associated with the pressing and sintering of refractory oxide materials may be employed as desired and include such steps as appropriate as mixing with resin binders and/or lubricating waxes and preliminary burn-off treatments to remove such resins and waxes for example prior to sintering. Such steps are described in standard texts such as "Enlargement and Compaction of Particulate Solids", Ed. Nayland G Stanley-Wood, Butterworths & Co. Ltd, 1983, particularly chapters 7 and 11; "Principles of Powder Technology", Ed. Martin Rhodes, Wiley, 1994, chapter 10; and "Principles of Ceramic Processing", J S Reed, Wiley Inter-science, 1995, chapters 12, 17, 20-22 and 29.

The zirconium-based metal may alternatively be brought into solution by a route other than one of the so-called "PUREX" processes. For example, the zirconium metal waste may be converted to ZrX₄, where "X" is a halide, using an intensified fluorination technique such as by a fluidised bed with hydrogen fluoride. Other fluorinating agents such as nitrofluor (NOF.3HF) may also be used. The zirconium halides thus prepared may be readily converted to oxides.

In practising the present invention, where the zirconium-based metal constitutes the cladding of a nuclear fuel rod, the whole fuel rod, including the irradiated uranium fuel, is preferably brought into solution in nitric acid. Thus, the solution will contain nitrates of uranium, plutonium, zirconium and also the fission products in the spent fuel. The uranium and plutonium may then be separated from the solution by one of the known so-called "PUREX" processes which are essentially solvent extraction techniques. See for example, "The Chemistry of the Purex Process" by J Malvyn McKibben, Radiochimica Acta 36 (1984) 3-15. This results in the solution retaining the fission by-products which are normally removed as a separate step in prior art processes and are normally treated as a separate waste product. Again, the resulting nitrates may be thermally treated to decompose and convert them to oxides, including those of at least some of the fission products.

Alternatively, oxides of the fission products may be separately treated and subsequently blended with the zirconium oxide powder in a preferred proportion.

A major advantage of the latter option is that the fission products are effectively encapsulated in the resulting sintered zirconium oxide body and a separate treatment stage for the fission products is removed from the process with a consequently great cost saving. Zirconium oxide is a particularly stable ceramic and has the necessary chemical durability to allow it to form the matrix for encapsulation of the high-level waste fission products. Furthermore, the melting point of zirconium oxide is greatly in excess of glass which forms the matrix in current vitrification encapsulation processes. The sintered bodies may be stored in drums in concrete grout for example. A further advantage conferred by the nature of zirconium oxide compared with glass is that it may allow higher levels of fission product waste to be incorporated into the ceramic encapsulant than is achievable with glass.

The sintered zirconium oxide material may also be used to encapsulate some or all of the plutonium arising from the nuclear reaction process in the same manner as described with reference to the fission products above.

The irradiated fuel rods may be processed as complete units without prior chopping up into shorter lengths so improving the efficiency and ease of automation of the process and also reducing the contamination attributable to the chopping up process. This again improves the economics of the process as a complete plant dedicated to cutting up and handling of the fuel rod pieces may be dispensed with.

In one aspect, the present invention is characterised in that the zirconium oxide, either alone or including at least some of the fission products, is mixed with a sol or a solution of a gel forming chemical, and a green body is produced from the mixture and subsequently sintered. Examples of suitable chemicals are aluminium secondary butoxide and aluminium iso-propoxide which form complementary phases with the zirconium oxide. The gel forming chemical may be treated with a modifying agent such as an alkanolamine, an example of which is triethanolamine,to stabilise them. This is due to metal alkoxides being readily precipitated in the presence of moisture. When stabilised a polycondensation reaction occurs promoting gelation on hydrolysis. This results in a stable cross-linked inorganic polymer gel. The modified chemical is mixed with the zirconium oxide to form a slurry, the proportion of zirconium oxide being added such that the resulting mixture is still workable and the density is as high as possible so as to minimise shrinkage during subsequent processing. The proportion of water added to the slurry controls the gelation time. The slurry so formed is then cast into a mould or otherwise formed into desired shapes such as by extrusion for example, and allowed to set. Once set, the green bodies are removed from their mould, if appropriate, and slowly dried so as to minimise cracking during shrinkage. The dried green bodies are then sintered to densify and increase the strength of the articles for long term storage in a repository.

A hydrolysed zirconium salt or other metal salt such as a chromium salt may be used instead of the aluminium alkoxide.

In a second aspect, the present invention is characterised in that the oxide is mixed with a sol or a solution of gel forming chemical, which hardens by heat (rather than by hydrolysis), and a green body is produced from the mixture and subsequently sintered. Examples of suitable materials include zirconium acetate, zirconium acetate/citric acid, zirconium nitrate/citric acid and zirconium acrylamide.

A particular advantage of the present invention in its second aspect is that after the drying process bonds are formed between the zirconium oxide particles and the residual material resulting from either the aluminium alkoxide or from the zirconium sol for example; this residual material comprising aluminium, zirconium and oxygen, as appropriate, on a molecular scale. Due to this residual material being on a substantially molecular scale, the necessary sintering temperature is greatly reduced since the rate of the sintering reaction is greatly enhanced. It is expected that temperatures will be generally lower than those normally needed for sintering similar zirconia powder bodies.

In a third aspect, the present invention is characterised in that the zirconium oxide, either alone or including at least some of fission products, is mixed with a gel which is freeze castable, and a green body is produced from the mixture and subsequently sintered. That is, the oxide is initially bound together by the so-called freeze-casting technique utilising a sol-gel method. Gelation takes place by dehydration of the sol during freezing and, at a critical concentration, the sol particles form chemical bonds. The result of this is that when an oxide mass which was previously a slurry, is brought back to room temperature from its freezing temperature, it remains in the green state in a stable solid and handleable form. Due to the formation of ice crystals as a result of the freezing process, the ceramic particles take up space between the ice crystals and form a continuous matrix around the crystals. On sintering of the thawed and dried green body, very little shrinkage occurs. Furthermore, due to the strong bonding produced during sol-gel freeze-casting, sintering temperatures are relatively low thus promoting relatively little shrinkage and consequent cracking.

A particular advantage of the freeze-casting technique is that it is essentially solvent free thus, reducing the hazards and consequent on-costs by way of more complex plant usually associated with the use of solvents. Prior technology relating to the use of the freeze-casting technique is applicable to the second preferred embodiment.

In the third aspect of the present invention utilising the freeze-casting technique, the zirconium oxide and fission products may be combined with a silica sol, or alternatively, with a zirconia sol.

In the invention, in any of the first, second and third aspects, filler powders such as zircon (ZrSiO₄) for example may be added to the zirconium oxide waste and sol to control shrinkage on sintering. Other ceramic filler powders may also be added as appropriate. The role of filler powder may be fulfilled by suitable content levels of the zirconium oxide waste powder itself.

The present invention also provides a process for the disposal of nuclear waste comprising converting at least said zirconium-based metal into a sintered body according to any of the first second and third aspects and storing said body.

The present invention also contemplates the encapsulation of fission product oxides within the sintered zirconium oxide body.

In order that the present invention may be more fully understood, examples will now be described with reference to the accompanying drawings, of which:
Figure 1 shows a flow chart of a first preferred embodiment of a process according to the present invention; and
Figure 2 which shows a flow chart of a second preferred embodiment of a process according to the present invention.

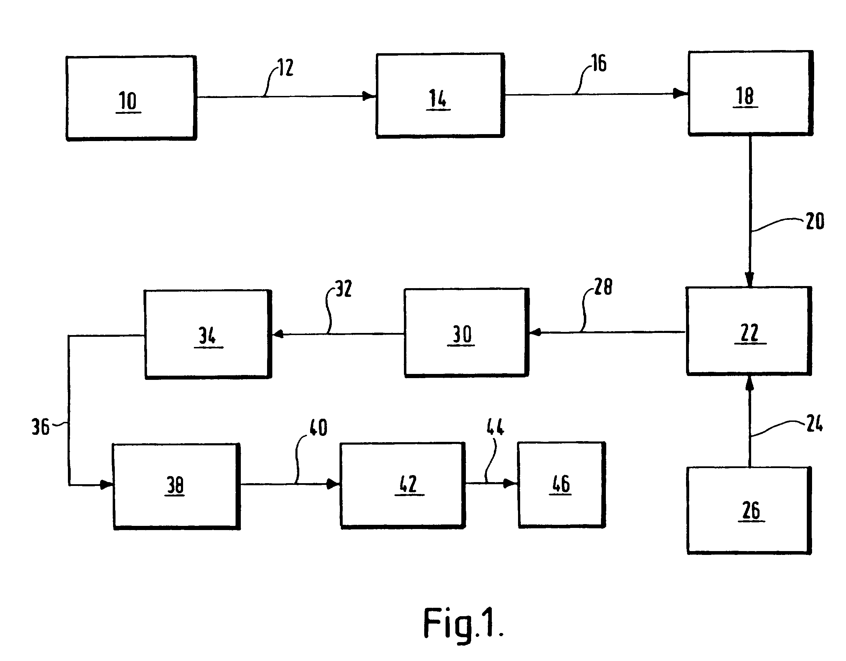

The process according to a first embodiment of the present invention may be described as follows and with reference to the flow chart shown in the Figure 1. A source of zirconium alloy fuel rod cladding is indicated at 10. The cladding is brought into solution by electrochemical dissolution 12 by making the cladding anodic and passing a current through the metal under a nitric acid electrolyte. This step results in the metal being converted to zirconium nitrate 14. However, during the dissolution step 12, a substantial quantity of the zirconium alloy is converted directly to an oxide which forms a sludge at the bottom of the dissolution tank and is subsequently removed to be added back into the process at a later stage. The zirconium nitrate is then thermally decomposed 16 to the oxide 18 such as by one or more of the techniques including direct heating, fluidised bed, plasma-arc or microwave assisted. The oxide 18 is then mixed 20 with a sol of a gel forming chemical which in this case is aluminium secondary butoxide which is diluted with alcohol and modified with an alkanolamine, in this case tri-ethanolamine. The modifying agent causes cross linking of the aluminium secondary butoxide in a controlled and time dependent manner on hydrolysis resulting in the onset of gelling. The zirconium oxide mixed with the gelling aluminium secondary butoxide forms a slurry 22 to which may optionally be added 24 material such as oxides for example of fission products and/or plutonium 26 which have been extracted from the dissolved spent uranium fuel by a known so-called "PUREX" process, the fission products and plutonium constituting high-level waste which must be encapsulated and stored in a repository for many years. The slurry 22 continues to gel and is cast or extruded 28 into moulds or self supporting shapes 30 where it is allowed to fully gel and solidify. After setting, the shaped "green" bodies are demoulded 32, if appropriate, to form free-standing, handleable bodies 34 which are then dried slowly 36 to prevent excessive cracking during shrinkage. The dried green bodies 38 are then sintered 40 at a substantially lower temperature than that required for physically mixed oxides to form durable refractory material monoliths 42 which may then be stored 44 in a repository 46 in known manner.

During the drying step 36, the water is driven off and the hydroxyl groups in the chemical matrix are decomposed to leave only aluminium and oxygen present in the structure on a substantially molecular scale and binding together the powder particles of zirconium oxide and also the particles of other constituents such as the fission products and plutonium for example. Due to the molecular scale of the matrix constituents, the sintering rate during the sintering step 40 is very high and can be accomplished at relatively lower temperatures in the region of about 1400°C compared with the higher temperatures conventionally used to sinter pressed green bodies of zirconium oxide. Therefore, the preferred embodiment of the present invention has many advantages over known techniques in that the resulting monoliths of refractory zirconium oxide are chemically both very stable and very durable and able to encapsulate the high level waste directly within the matrix. Furthermore, the low sintering temperature which the preferred embodiment of the process of the present invention permits reduces hazards associated with high vapour pressures of some elements and consequently further reduces contamination and plant costs.

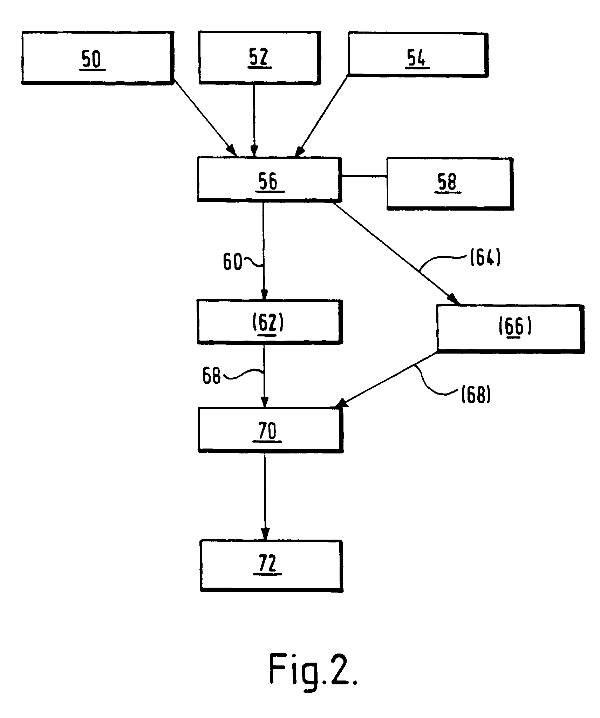

Figure 2 shows a flow sheet of an alternative process according to the present invention utilising the technique of freeze casting. A freeze castable silica or zirconium oxide sol 50 is mixed with a ceramic filler powder 52 and zirconium oxide waste 54 to form a slurry 56. The starting materials 52, 54 may be milled so as to improve homogeneity and mixing prior to forming the slurry 56. The zirconium oxide waste 54 may include fission products incorporated therein but, high-level fission product waste 58 may alternatively be added separately or additionally as a constituent of the slurry 56. The slurry 56 is cast 60 into a mould (not shown) having a cavity of any desired shape and freeze-cast to form a frozen body 62. The mould may be vibrated so as to assist packing of the slurry material within the mould and to assist mould filling by the elimination of air bubbles. The slurry 56 may alternatively be freeze extruded 64 to form an alternative frozen body 66. The freeze casting process causes the slurry constituents to form chemical bonds such that when the frozen body 62 (66) is warmed 68 and the body demoulded, it forms a relatively strong, free-standing and handleable monolith 70. The thawed body 70 is dried slowly so as to avoid too rapid shrinkage and consequent cracking and, once dried it is sintered to form a high density, durable ceramic body 72 containing high level fission product waste material.

A first example of the second preferred embodiment of the process of the present invention is to form a zircon, ZrSiO₄, monolith. The process comprises making a mixture of a castable silica sol which is mixed with a zircon filler powder and waste zirconium oxide formed from the electrochemical dissolution of zirconium metal fuel cans. The mixture may also contain fission products from the zirconium metal waste stream or, fission product waste may be added as a separate component of the mixture. The process comprises the steps of vibro-energy milling the powder constituents so as to homogenise and thoroughly mix thus, breaking up zirconia flakes from electrochemical dissolution. The milling may take place wet so as to reduce dust and contamination hazard or dry. The milled and homogenised powder is added to silica-sol to form the ceramic slurry 56, the slurry being capable of being poured into a mould (not shown) or at least capable of being so transferred to a mould. The mould may be connected to a vacuum system so as to remove entrained air or may be provided with a vibratory system for the same purpose and also to assist mould filling. The filled moulds are rapidly cooled to about -50°C to freeze them and aged for a suitable period which may range from about 10 minutes to longer times. Once aged, the filled moulds are rapidly warmed to room temperature and the now solid monoliths are removed from the mould and dried in air. The dried monoliths are then sintered at a minimum temperature of 1400°C. The free silica from the sol reacts with a stoichiometric amount of zirconium oxide waste and which react on sintering to form zircon. The small particle size of the sol and filler particles ensures lower sintering temperatures than normal ceramic forming processes used heretofore. Chemical bonds are formed during the freeze casting process between the silica and zirconium oxide and other constituents which are reinforced and serve to accelerate the sintering process at a low sintering temperature.

An alternative to silica-sol is the use of a zirconium oxide sol. This process involves the mixing of a zircon filler powder with zirconium waste and optionally fission product waste which is then mixed with a zirconium oxide sol. The process steps for producing a sintered zircon and stabilised zirconium oxide monolith are essentially as described above with reference to the formation of a monolith using the silica-sol route.

## Claims

1. A process for the treatment of zirconium-based metal waste, the process including the steps of converting at least some of said zirconium-based metal into an oxide (as hereinbefore defined), characterised by forming a mixture of said oxide with a sol or a solution of a gel forming chemical, producing a green body from the mixture, and sintering said green body.

2. A process according to claim 1 wherein said sol or solution of a gel forming chemical hardens by hydrolysis.

3. A process according to claim 2 wherein said sol or solution of a gel forming chemical comprises a metal salt.

4. A process according to claim 3 wherein said salt is an alkoxide.

5. A process according to any preceding claim wherein said sol or solution of a gel forming chemical is treated with a modifying agent.

6. A process according to claim 5 wherein said modifying agent is an alkanolamine.

7. A process according to any preceding claim wherein the zirconium oxide is mixed with a hydrolysed zirconium salt or other metal salt.

8. A process for the treatment of zirconium-based metal waste, the process including the steps of converting at least some of said zirconium-based metal into an oxide (as hereinbefore defined), characterised by forming a mixture of said oxide with a sol or a solution of a gel forming chemical, which hardens by heat, producing a green body from the mixture, and sintering said green body.

9. A process according to claim 8 wherein said chemical or combination is selected from the group comprising zirconium acetate, zirconium acetate/citric acid, zirconium nitrate/citric acid and zirconium acrylamide.

10. A process for the treatment of zirconium-based metal waste, the process including the steps of converting at least some of said zirconium-based metal into an oxide (as hereinbefore defined), characterised by forming a mixture of said oxide with a sol which gels and is freeze-castable, producing a green body from the mixture, and sintering said green body.

11. A process according to claim 10 wherein the sol comprises a silica sol or a zirconia sol, and the mixture thereof with the said oxide is solidified by freeze-casting to form a solid, handleable green body for sintering.

12. A process according to claim 10 or claim 11 wherein filler powder is included in said mixture.

13. A process according to any one of claims 10 to 12 wherein the green body is thawed and/or dried prior to sintering.

14. A process according to any preceding claim wherein additional metal oxides are present in the green body to stabilise the chemical phases of the sintered article.

15. A process according to any preceding claim wherein said zirconium-based metal is brought into solution by chemical or by electrochemical dissolution, and said oxide includes at least some zirconium oxide formed directly as a result of said dissolution and/or by conversion from said zirconium-based metal in solution.

16. A process according to claim 15 wherein the metal solution is in the form of a nitrate which is thermally treated to decompose the nitrate to the oxide.

17. A process according to claim 15 wherein the zirconium-based metal is brought into solution by means of dissolution of a fluoride.

18. A process according to any preceding claim wherein the zirconium-based metal waste is derived from the cladding of a nuclear fuel rod or a fuel rod including irradiated fuel.

19. A process according to any one of claims 15 to 17 wherein the zirconium-based metal waste is derived from a nuclear fuel rod, including irradiated fuel, fuel constituents of the solution being separated prior to conversion of the solution to the oxide.

20. A process according to claim 19 wherein at least some fission product constituents remain with the zirconium solution and the resulting oxide.

21. A process according to any preceding claim wherein the sintered body is hot pressed to densify it.

22. A process for the disposal of nuclear waste comprising the steps of converting at least zirconium-based metal into a sintered body according to any one of claims 1 to 21 and storing said body.

## Patentansprüche

1. Verfahren zur Behandlung von Metallabfällen auf Zirconiumbasis, wobei das Verfahren die Schritte des Umwandelns wenigstens eines Teils des Metalls auf Zirconiumbasis in ein Oxid (wie hier zuvor definiert) umfaßt, dadurch gekennzeichnet, daß ein Gemisch des Oxids mit einem Sol oder einer Lösung einer gelbildenden Chemikalie gebildet, ein Grünling aus dem Gemisch hergestellt und der Grünling gesintert wird.

2. Verfahren nach Anspruch 1, bei dem das Sol oder die Lösung einer gelbildenden Chemikalie durch Hydrolyse härtet.

3. Verfahren nach Anspruch 2, bei dem das Sol oder die Lösung einer gelbildenden Chemikalie ein Metallsalz umfaßt.

4. Verfahren nach Anspruch 3, bei dem das Salz ein Alkoxid ist.

5. Verfahren nach einem vorhergehenden Anspruch, bei dem das Sol oder die Lösung einer gelbildenden Chemikalie mit einem Modifikator behandelt wird.

6. Verfahren nach Anspruch 5, bei dem der Modifikator ein Alkanolamin ist.

7. Verfahren nach einem vorhergehenden Anspruch, bei dem das Zirconiumoxid mit einem hydrolysierten Zirconiumsalz oder einem anderen Metallsalz gemischt wird.

8. Verfahren zur Behandlung von Metallabfällen auf Zirconiumbasis, wobei das Verfahren die Schritte des Umwandelns wenigstens eines Teils des Metalls auf Zirconiumbasis in ein Oxid (wie hier zuvor definiert) umfaßt, dadurch gekennzeichnet, daß ein Gemisch des Oxids mit einem Sol oder einer Lösung einer gelbildenden Chemikalie gebildet wird, das bei Wärme härtet, ein Grünling aus dem Gemisch hergestellt und der Grünling gesintert wird.

9. Verfahren nach Anspruch 8, bei dem die Chemikalie oder die Kombination aus der Gruppe ausgewählt ist, die Zirconiumacetat, Zirconiumacetat/Citronensäure, Zirconiumnitrat/Citronensäure und Zirconiumacrylamid umfaßt.

10. Verfahren zur Behandlung von Metallabfällen auf Zirconiumbasis, wobei das Verfahren die Schritte des Umwandelns wenigstens eines Teils des Metalls auf Zirconiumbasis in ein Oxid (wie hier zuvor definiert) umfaßt, dadurch gekennzeichnet, daß ein Gemisch des Oxids mit einem Sol gebildet wird, das geliert und gefroren gießbar ist, ein Grünling aus dem Gemisch hergestellt und der Grünling gesintert wird.

11. Verfahren nach Anspruch 10, bei dem das Sol ein Siliciumdioxidsol oder ein Zirconiumdioxidsol umfaßt und das Gemisch desselben mit dem Oxid durch Gefriergießen verfestigt wird, um einen festen, handhabbaren Grünling zum Sintern zu bilden.

12. Verfahren nach Anspruch 10 oder Anspruch 11, bei dem in dem Gemisch ein pulverförmiger Füllstoff enthalten ist.

13. Verfahren nach einem der Ansprüche 10 bis 12, bei dem der Grünling vor dem Sintern aufgetaut und/oder getrocknet wird.

14. Verfahren nach einem vorhergehenden Anspruch, bei dem zusätzliche Metalloxide im Grünling vorhanden sind, um die chemischen Phasen des gesinterten Gegenstandes zu stabilisieren.

15. Verfahren nach einem vorhergehenden Anspruch, bei dem das Metall auf Zirconiumbasis durch chemisches oder elektrochemisches Lösen in Lösung gebracht wird und das Oxid wenigstens einen Teil des direkt als Ergebnis des Lösens und/oder durch Umwandlung aus dem Metall auf Zirconiumbasis in Lösung gebildeten Zirconiumoxids enthält.

16. Verfahren nach Anspruch 15, bei dem die Metallösung in Form eines Nitrates vorliegt, das wärmebehandelt wird, um das Nitrat zum Oxid zu zersetzen.

17. Verfahren nach Anspruch 15, bei dem das Metall auf Zirconiumbasis mittels Lösen eines Fluorids in Lösung gebracht wird.

18. Verfahren nach einem vorhergehenden Anspruch, bei dem der Metallabfall auf Zirconiumbasis von der Umhüllung eines nuklearen Brennstabes oder eines bestrahlten Brennstoff enthaltenden Brennstabes stammt.

19. Verfahren nach einem der Ansprüche 15 bis 17, bei dem der Metallabfall auf Zirconiumbasis von einem nuklearen Brennstab stammt, der bestrahlten Brennstoff enthält, wobei die Brennstoff-Bestandteile der Lösung vor der Umwandlung der Lösung in das Oxid getrennt werden.

20. Verfahren nach Anspruch 19, bei dem wenigstens einige Spaltproduktbestandteile in der Zirconiumlösung und dem resultierenden Oxid verbleiben.

21. Verfahren nach einem vorhergehenden Anspruch, bei dem der Sinterkörper warmgepreßt wird, um ihn zu verdichten.

22. Verfahren zur Entsorgung nuklearer Abfälle, das die Schritte des Umwandelns zumindest eines Metalls auf Zirconiumbasis in einen Sinterkörper nach einem der Ansprüche 1 bis 21 und der Lagerung dieses Körpers umfaßt.

## Revendications

1. Procédé pour le traitement de déchets de métaux à base de zirconium, le procédé incluant les étapes de convertir au moins une partie du métal à base de zirconium en un oxyde (tel que défini ici), caractérisé en ce que l'on forme un mélange du dit oxyde avec un sol ou une solution d'un agent chimique formant un gel, et l'on produit un corps vert depuis le mélange, et on fritte le dit corps vert.

2. Procédé selon la revendication 1, caractérisé en ce que ledit sol ou ladite solution de l'agent chimique formant un gel est durci par hydrolyse.

3. Procédé selon la revendication 2, caractérisé en ce que ledit sol ou la solution d'un agent chimique formant un gel, comporte un sel de métal.

4. Procédé selon la revendication 3, caractérisé en ce que ledit sel est un alkoxyde.

5. Procédé selon l'une des revendications précédentes, caractérisé en ce que ledit sol ou la solution d'un agent chimique formant un gel est traité par un agent de modification.

6. Procédé selon la revendication 5, caractérisé en ce que l'agent de modification est une alkanolamine.

7. Procédé selon l'une des revendications précédentes, caractérisé en ce que l'oxyde de zirconium est mélangé avec un sel de zirconium hydrolysé ou un autre sel de métal.

8. Procédé pour le traitement de déchets de métaux à base de zirconium, le procédé incluant les étapes de convertir au moins une partie du métal à base de zirconium en un oxyde (tel que défini ici), caractérisé en ce que l'on forme un mélange du dioxyde avec un sol ou une solution d'un agent chimique formant un gel, qui durcit à la chaleur, on produit un corps vert à partir du mélange, et on fritte ledit corps vert.

9. Procédé selon la revendication 8, caractérisé en ce que ledit corps chimique ou la combinaison est choisi parmi le groupe comprenant de l'acétate de zirconium, acétate de zirconium/acide citrique, nitrate de zirconium/acide citrique, nitrate de zirconium/acide citrique et acrylamide de zirconium.

10. Procédé pour le traitement de déchets de métaux à base de zirconium, le procédé incluant les étapes de convertir au moins une partie du métal à base de zirconium en un oxyde (tel que défini ici), caractérisé en ce que l'on forme un mélange de dioxyde avec un sol qui se transforme en gel et est susceptible d'être moulé à congélation, produisant un corps vert à partir du mélange, et on fritte ledit corps vert.

11. Procédé selon la revendication 10, caractérisé en ce que le sol comporte un sol de silice ou un sol de zirconium et le mélange de ceci avec le dioxyde est solidifié par moulage à froid pour former un corps vert solide susceptible d'être manipulé pour frittage.

12. Procédé selon la revendication 10 ou 11, caractérisé en ce de la poudre de charge est incluse dans ledit mélange.

13. Procédé selon l'une des revendications 10 à 12, caractérisé en ce que le corps vert est décongelé et/ou séché avant frittage.

14. Procédé selon l'une des revendications précédentes, caractérisé en ce que des oxydes de métaux additionnels sont présents dans le corps vert pour stabiliser les phases chimiques du corps fritté.

15. Procédé selon l'une des revendications précédentes, caractérisé en ce que ledit métal à base de zirconium est mis en solution par dissolution chimique ou électrochimique, et le dioxyde inclut au moins un oxyde de zirconium formé directement et résultant de ladite dissolution et/ou par conversion à partir du métal à base de zirconium dans la solution.

16. Procédé selon la revendication 15, caractérisé en ce que la solution de métal est sous la forme d'un nitrate qui est traité thermiquement pour décomposer le nitrate en oxyde.

17. Procédé selon la revendication 15, caractérisé en ce que le métal à base de zirconium est alimenté aux solutions au moyen de dissolution dans un fluorure.

18. Procédé selon l'une des revendications précédentes, caractérisé en ce que le déchet de métal à base de zirconium est dérivé de la gaine d'une tige de combustible nucléaire ou d'une tige de combustible incluant un combustible irradié.

19. Procédé selon les revendications 15 à 17, caractérisé en ce que le déchet de métal à base de zirconium est dérivé d'une tige de combustible nucléaire, incluant du combustible irradié, les constituants de combustible de la solution étant séparés avant la conversion de la solution en oxyde.

20. Procédé selon la revendication 19, caractérisé en ce qu'au moins les éléments de produits de fission restent dans la solution de zirconium et l'oxyde résultant.

21. Procédé selon l'une des revendications précédentes, caractérisé en ce que le corps est pressé à chaud pour augmenter sa densité.

22. Procédé pour disposer de déchets nucléaires comprenant les étapes de convertir au moins un métal à base de zirconium en un corps fritté selon l'une des revendications 1 à 21, et de stockage du dit corps.
